# EUROPÄISCHE PATENTSCHRIFT

(11) **EP 3 536 416 B1**
(45) Veröffentlichungstag und Bekanntmachung des Hinweises auf die Patenterteilung: **23.12.2020**
(21) Anmeldenummer: 19161011.2
(22) Anmeldetag: 06.03.2019
(51) Int. Cl.: B21D 55/00, B21D 5/02, F16P 3/14, B05B 9/03

(54) **VERFAHREN ZUR ÜBERWACHUNG EINER FERTIGUNGSANLAGE SOWIE FERTIGUNGSANLAGE MIT EINEM SICHERHEITSSYSTEM**
METHOD FOR MONITORING A PRODUCTION ASSEMBLY AND MANUFACTURING SYSTEM WITH A SAFETY SYSTEM
PROCÉDÉ DE SURVEILLANCE D'UNE INSTALLATION DE FABRICATION AINSI QU'INSTALLATION DE FABRICATION DOTÉE D'UN SYSTÈME DE SÉCURITÉ

(30) Priorität: 07.03.2018 AT 501872018
(43) Veröffentlichungstag der Anmeldung: 11.09.2019
(73) Patentinhaber: TRUMPF Maschinen Austria GmbH & Co. KG., 4061 Pasching (AT)
(72) Erfinder: JUNGMAYR, Thomas, 4614 Marchtrenk (AT); KUBINGER, Rudolf, 4720 Kallham (AT); MAYRHOFER, Johann, 4542 Nussbach (AT)
(74) Vertreter: Burger, Hannes

(56) Entgegenhaltungen:
- EP-A1- 2 431 650
- DE-A1-102014 105 120
- JP-U- S5 851 847
- JP-U- S5 999 100

## Beschreibung

Die Erfindung betrifft ein Verfahren zur Überwachung eines Gefahrenbereichs einer Fertigungsanlage zum Freibiegen oder Prägebiegen von einem aus einem Blech zu fertigenden Werkstück mittels einer Biegepresse vor deren oberen Pressbalken. Weiters betrifft die Erfindung auch noch eine Fertigungsanlage mit einem Sicherheitssystem zum Freibiegen oder Prägebiegen von einem aus einem Blech zu fertigenden Werkstück mittels einer Biegepresse.

Es beschreibt die EP 2 431 650 A1 ein Schutzsystem für die Bediensicherheit an Maschinen, insbesondere an Gesenk-Biegepressen. Es ist eine erste Schutzvorrichtung vorgesehen, welche mitfahrend an der oberen Wange sowie relativ dazu höhenverstellbar gehalten ist. Der von der ersten Schutzvorrichtung definierte erste Schutzbereich wird an das erste Werkzeugteil angepasst, um so den unmittelbaren Biegebereich überwachen zu können. Um Quetschungen zwischen der oberen Wange und dem beim Biegevorgang hochschwenkenden Blechteil zu vermeiden, ist eine sekundäre Schutzvorrichtung vorgesehen, von welcher ein schützendes Lichtgitter erzeugt wird. An der Frontseite der oberen Wange sind in seitlichen Randabschnitten jeweils Lichtsender und Lichtempfänger befestigt, wobei eine mehrfache Anordnung in vertikaler Richtung übereinander derselben den zweiten Schutzbereich definiert.

Das JP S58 51847 U beschreibt ebenfalls eine gattungsgemäß ausgebildete Fertigungsanlage zum Biegen von einem aus einem Blech zu fertigenden Werkstück mittels einer Biegepresse. Die Biegepresse umfasst ein Maschinengestell, einen unteren Pressbalken, einen oberen Pressbalken sowie an den Pressbalken angeordnete Werkzeugaufnahmen, an denen ein Biegewerkzeug mit zumindest einem Biegestempel und zumindest einem Biegegesenk gehalten ist. Im Frontbereich des Maschinengestells sind an diesem jeweils an Seitenwänden mehrere Sicherheitsvorrichtungen angeordnet, welche jeweils einen eigenen Überwachungsbereich definieren. Die in zueinander unterschiedlichen Abständen vor dem oberen Pressbalken befindlichen Sicherheitsvorrichtungen mit ihren Überwachungsbereichen sind in vertikaler Richtung zueinander versetzt angeordnet.

Das JP S59 99100 U beschreibt mehrere im äußeren Randbereich um den Biegebereich herum angeordnete und jeweils zusammenwirkende Sicherheitsvorrichtungen. Die im Frontbereich des Maschinengestells befindlichen und an diesem jeweils gehaltenen Sende- und Empfangsvorrichtungen definieren die jeweiligen Schutzbereiche. Es wird von der dem Biegewerkzeug näherliegend angeordneten Sicherheitsvorrichtung lediglich der unmittelbare Biegebereich mit einer einzigen eine Überwachungsebene bildenden Sicherheitsvorrichtung überwacht.

Aus der DE 10 2014 105 120 A1 ist eine Sicherheitsgitteranordnung zur Sicherung einer Werkzeugmaschine bekannt geworden. Zur Überwachung des unmittelbaren Gefahrenbereichs zwischen dem Oberwerkzeug und dem Unterwerkzeug ist jeweils seitlich neben dem Oberwerkzeug und Unterwerkzeug ein Sender und ein Empfänger am Maschinengestell befestigt. Die Lichtgitteranordnung kann weiters in zwei in vertikaler Richtung übereinander angeordnete Überwachungsbereiche aufgeteilt sein.

Bei einem bisher bekannten Sicherheitssystem für Abkantpressen, Schneidemaschinen, Stanzmaschinen, wie dieses in der DE 197 17 299 A1 beschrieben ist, wurden die Sendevorrichtung und die Erfassungsvorrichtung jeweils verstellbar an fest mit dem oberen Pressbalken verbundenen Haltearmen gehalten. Der Überwachungsbereich mit den beiden voneinander distanziert verlaufenden Messstrahlen befindet sich im Bereich des unteren Endes des oberen Biegestempels, welches dem unterhalb befindlichen Biegegesenk zugewendet ist. Eine Veränderung der relativen Lage der Sendevorrichtung sowie der Erfassungsvorrichtung bezüglich des oberen Pressbalkens erfolgte nur zu Einstell- und Justiertätigkeiten in Abhängigkeit von der Länge oder Höhe des oberen Biegestempels. Ansonsten erfolgte eine starre Befestigung am oberen Pressbalken und damit verbunden eine fixe Mitverstellung mit diesem. Damit konnte im direkten Biege- und Bearbeitungsbereich des Werkstücks der Gefahrenbereich zwischen dem Biegestempel und dem Biegegesenk des Biegewerkzeugs überwacht werden.

Aufgabe der vorliegenden Erfindung war es, die Nachteile des Standes der Technik zu überwinden und ein Verfahren zur Überwachung eines Gefahrenbereichs bei einer Fertigungsanlage sowie eine Fertigungsanlage mit einem Sicherheitssystem zur Verfügung zu stellen, mittels derer ein Benutzer vor einem Einklemmen zwischen einem beim Biegevorgang hochgeschwenkten Abschnitt des herzustellenden Werkstücks und dem oberen Pressbalken geschützt werden soll. Weiters sollen aber auch Beschädigungen am oberen Pressbalken oder daran befindlichen Einrichtungen oder Vorrichtungen verhindert werden.

Diese Aufgabe wird durch ein Verfahren zur Überwachung eines Gefahrenbereichs bei einer Fertigungsanlage sowie von einer Fertigungsanlage zum Freibiegen oder Prägebiegen von einem aus einem Blech zu fertigenden Werkstück mittels einer Biegepresse gemäß den Ansprüchen gelöst.

Das Verfahren dient zur Überwachung einer Fertigungsanlage zum Freibiegen oder Prägebiegen von einem aus einem Blech zu fertigenden Werkstück mittels einer Biegepresse, wobei dabei die nachfolgend angeführten Schritte durchgeführt werden:
- Bereitstellen der Biegepresse, insbesondere einer Abkantpresse, mit einem Maschinengestell, einem unteren Pressbalken, einem oberen Pressbalken sowie an den Pressbalken angeordneten oder ausgebildeten Werkzeugaufnahmen, wobei der obere Pressbalken eine Frontseite, eine Rückseite, einen ersten Stirnendbereich, einen zweiten Stirnendbereich sowie eine obere Längsstirnseite und eine untere Längsstirnseite aufweist,
- Bereitstellen zumindest eines Biegewerkzeugs mit zumindest einem Biegestempel und zumindest einem Biegegesenk,
- Bereitstellen eines Sicherheitssystems mit zumindest einer Sicherheitsvorrichtung umfassend zumindest eine Sendevorrichtung und zumindest eine Erfassungsvorrichtung, wobei von der zumindest einen Sicherheitsvorrichtung ein Überwachungsbereich definiert wird, und dabei
- von einer ersten Sicherheitsvorrichtung des Sicherheitssystems mit deren ersten Sendevorrichtung und ersten Erfassungsvorrichtung ein erster Überwachungsbereich definiert wird, wobei die erste Sendevorrichtung und die erste Erfassungsvorrichtung am oberen Pressbalken angeordnet sind, und der erste Überwachungsbereich derart vor der Frontseite des oberen Pressbalkens angeordnet wird, dass bei einem Eintritt eines Gegenstandes in den ersten Überwachungsbereich ein erstes Signal von der ersten Sicherheitsvorrichtung generiert und an die Steuerungsvorrichtung weitergeleitet wird,
- Bereitstellen einer Steuerungsvorrichtung und eines Eingabeterminals, wobei das Sicherheitssystem und das Eingabeterminal mit der Steuerungsvorrichtung kommunikationsverbunden sind, und dabei
- von einer ersten Sicherheitsvorrichtung des Sicherheitssystems ein erster Überwachungsbereich definiert wird, und der erste Überwachungsbereich derart vor der der Frontseite des oberen Pressbalkens angeordnet wird, dass bei einem Eintritt eines Gegenstandes in den ersten Überwachungsbereich ein erstes Signal von der ersten Sicherheitsvorrichtung generiert und an die Steuerungsvorrichtung weitergeleitet wird,
- eine zweite Sicherheitsvorrichtung mit einer zweiten Sendevorrichtung und einer zweiten Erfassungsvorrichtung bereitgestellt wird, wobei von der zweiten Sicherheitsvorrichtung ein zweiter Überwachungsbereich definiert wird, und die zweite Sendevorrichtung und die zweite Erfassungsvorrichtung ebenfalls am oberen Pressbalken angeordnet sind,
- der zweite Überwachungsbereich ebenfalls vor der Frontseite des oberen Pressbalkens und unmittelbar benachbart zur ersten Sicherheitsvorrichtung sowie zwischen der ersten Sicherheitsvorrichtung und dem oberen Pressbalken verlaufend angeordnet ist, und
- bei einem Eintritt eines Gegenstandes in den zweiten Überwachungsbereich ein zweites Signal von der zweiten Sicherheitsvorrichtung generiert und an die Steuerungsvorrichtung weitergeleitet wird.

Vorteilhaft ist bei den hier gewählten Verfahrensschritten, dass durch das Vorsehen zumindest einer ersten Sicherheitsvorrichtung der sich vor der Frontseite des oberen Pressbalkens befindliche Raum überwacht wird und bei einem Eindringen eines Gegenstandes oder eines Körperteils des Maschinenbedieners von der ersten Sicherheitsvorrichtung das Eindringen erkannt und ein entsprechendes erstes Signal generiert wird. Dieses erste Signal wird an die Steuerungsvorrichtung weitergeleitet und von dieser eine vordefinierte Maßnahme eingeleitet und/oder durchgeführt. Dabei kann beispielsweise die Abwärts-Verstellgeschwindigkeit des oberen Pressbalkens reduziert werden, wobei dies bis hin zum Stillstand und Abbruch des Biegevorgangs führen kann. Durch das Erkennen und Erfassen eines sich in den ersten Überwachungsbereich der ersten Sicherheitsvorrichtung eindringenden Gegenstandes könnte auch ein Warnsignal ausgegeben werden, um dies der Maschinenbedienperson zu signalisieren.

Durch das Vorsehen zumindest einer zweiten Sicherheitsvorrichtung, welche ebenfalls vor der Fronseite des oberen Pressbalkens angeordnet ist, kann ein zusätzlicher Überwachungsbereich geschaffen werden, um so eine noch sicherere und zeitlich gestaffelte Überwachung des Bereichs vor der Frontseite des oberen Pressbalkens durchführen zu können. Damit können je nach Anordnung der Sicherheitsvorrichtungen zueinander zeitlich gestaffelte oder zeitlich unterschiedliche Ereignisse, welche ein Eindringen in zumindest einen der Überwachungsbereiche signalisieren, sicher erkannt werden. Damit kann die Sicherheit vor körperlichen Schäden oder Beschädigungen an der Biegepresse noch sicherer verhindert werden.

Vorteilhaft ist auch eine Verfahrensvariante, bei der von der Steuerungsvorrichtung bei Erhalt des ersten Signals die Verstellgeschwindigkeit des oberen Pressbalkens hin in Richtung auf den unteren Pressbalken bezüglich einer voreingestellten oder von der Steuerungsvorrichtung vorgegebenen Verstellgeschwindigkeit verringert wird. Durch das Verringern der Verstellgeschwindigkeit des oberen Pressbalkens kann so beispielsweise die Hochschwenkgeschwindigkeit des herzustellenden Werkstückes soweit verringert werden, dass beispielsweise durch Ausgabe eines Warnsignals die Maschinenbedienperson den im Bereich vor dem oberen Pressbalken befindlichen Körperteil, insbesondere die Hand oder die Finger, rasch noch entfernen kann, ohne dass es zu einem Verklemmen oder Quetschen derselben zwischen dem Werkstück und dem oberen Pressbalken kommt. Damit kann aber auch die Reaktionszeit bis zum Eindringen des Gegenstandes in den zweiten Überwachungsbereich geringfügig verlängert werden.

Eine weitere vorteilhafte Vorgehensweise ist dadurch gekennzeichnet, dass von der Steuerungsvorrichtung bei Erhalt des zweiten Signals ein Not-Haltebefehl generiert wird und die Verstellbewegung des oberen Pressbalkens hin in Richtung auf den unteren Pressbalken gestoppt wird. Da die zweite Sicherheitsvorrichtung mit deren zweiten Überwachungsbereich der Frontseite oder Frontfläche des oberen Pressbalkens näherliegend angeordnet ist, ist eine rasche Abschaltung der Abwärtsbewegung durchzuführen, um so eine Verletzung der Bedienperson oder eine Beschädigung des oberen Pressbalkens sowie gegebenenfalls daran angeordneter Bauteile sicher verhindern zu können.

Vorteilhaft ist auch eine Verfahrensvariante, bei welcher die zumindest eine erste Sicherheitsvorrichtung erst bei einer Eingabe eines Startbefehls für den Beginn des Biegevorgangs von der Steuerungsvorrichtung aktiviert wird und/oder dass die zumindest eine zweite Sicherheitsvorrichtung erst bei einer Eingabe eines Startbefehls für den Beginn des Biegevorgangs von der Steuerungsvorrichtung aktiviert wird. Um unnötige Schaltvorgänge zu vermeiden, wird die erste Sicherheitsvorrichtung und/oder die zweite Sicherheitsvorrichtung erst am Beginn des Biegevorgangs aktiviert und in Betrieb gesetzt. Damit wird die Möglichkeit geschaffen, solange kein Biegevorgang und damit verbunden keine eine Abwärtsbewegung des oberen Pressbalkens durchgeführt wird, Tätigkeiten in dem überwachten Bereich oder der überwachten Zone durchführen zu können, ohne damit das Sicherheitssystem auszulösen.

Die Aufgabe der Erfindung wird aber unabhängig davon auch durch eine erfindungsgemäß ausgebildete Fertigungsanlage gelöst, welche zum Freibiegen oder Prägebiegen von einem aus einem Blech zu fertigenden Werkstück mittels einer Biegepresse dient. Die Fertigungsanlage umfasst dabei :
- eine Biegepresse, insbesondere eine Abkantpresse, mit einem Maschinengestell, einem unteren Pressbalken, einem oberen Pressbalken sowie an den Pressbalken angeordneten oder ausgebildeten Werkzeugaufnahmen, wobei der obere Pressbalken eine Frontseite, eine Rückseite, einen ersten Stirnendbereich, einen zweiten Stirnendbereich sowie eine obere Längsstirnseite und eine untere Längsstirnseite aufweist,
- zumindest ein Biegewerkzeug mit zumindest einem Biegestempel und zumindest einem Biegegesenk,
- ein Sicherheitssystem mit zumindest einer Sicherheitsvorrichtung umfassend zumindest eine Sendevorrichtung und zumindest eine Erfassungsvorrichtung, wobei von der zumindest einen Sicherheitsvorrichtung ein Überwachungsbereich definiert ist, und dabei
- von einer ersten Sicherheitsvorrichtung mit deren ersten Sendevorrichtung und ersten Erfassungsvorrichtung des Sicherheitssystems ein erster Überwachungsbereich definierter ist, wobei die erste Sendevorrichtung und die erste Erfassungsvorrichtung am oberen Pressbalken angeordnet sind, und der erste Überwachungsbereich vor der Frontseite des oberen Pressbalkens (16) verlaufend angeordnet ist,
- ein von zumindest einer ersten Sicherheitsvorrichtung des Sicherheitssystems definierter erster Überwachungsbereich vor der Frontseite des oberen Pressbalkens verlaufend angeordnet ist, und weiters
- ist eine zweite Sicherheitsvorrichtung mit einer zweiten Sendevorrichtung und einer zweiten Erfassungsvorrichtung vorgesehen, wobei von der zweiten Sicherheitsvorrichtung ein zweiter Überwachungsbereich definiert ist, und die zweite Sendevorrichtung und die zweite Erfassungsvorrichtung ebenfalls am oberen Pressbalken angeordnet sind, und weiters
- ist der zweite Überwachungsbereich ebenfalls vor der Frontseite des oberen Pressbalkens und unmittelbar benachbart zur ersten Sicherheitsvorrichtung sowie zwischen der ersten Sicherheitsvorrichtung und dem oberen Pressbalken verlaufend angeordnet.

Der dadurch erzielte Vorteil liegt darin, dass durch das Vorsehen zumindest einer ersten Sicherheitsvorrichtung der sich vor der Frontseite des oberen Pressbalkens befindliche Raum überwacht wird und bei einem Eindringen eines Gegenstandes oder eines Körperteils des Maschinenbedieners von der ersten Sicherheitsvorrichtung das Eindringen erkannt und ein entsprechendes erstes Signal generiert wird. Dieses erste Signal wird an die Steuerungsvorrichtung weitergeleitet und von dieser eine vordefinierte Maßnahme eingeleitet und/oder durchgeführt. Dabei kann beispielsweise die Abwärts-Verstellgeschwindigkeit des oberen Pressbalkens reduziert werden, wobei dies bis hin zum Stillstand und Abbruch des Biegevorgangs führen kann. Durch das Erkennen und Erfassen eines sich in den ersten Überwachungsbereich der ersten Sicherheitsvorrichtung eindringenden Gegenstandes könnte auch ein Warnsignal ausgegeben werden, um dies der Maschinenbedienperson zu signalisieren.

Durch das Vorsehen zumindest einer zweiten Sicherheitsvorrichtung, welche ebenfalls vor der Fronseite des oberen Pressbalkens angeordnet ist, kann ein zusätzlicher Überwachungsbereich geschaffen werden, um so eine noch sicherere und zeitlich gestaffelte Überwachung des Bereichs vor der Frontseite des oberen Pressbalkens durchführen zu können. Damit können je nach Anordnung der Sicherheitsvorrichtungen zueinander zeitlich gestaffelte oder zeitlich unterschiedliche Ereignisse, welche ein Eindringen in zumindest einen der Überwachungsbereiche signalisieren, sicher erkannt werden. Damit kann die Sicherheit vor körperlichen Schäden oder Beschädigungen an der Biegepresse noch sicherer verhindert werden.

Eine andere Ausführungsform zeichnet sich dadurch aus, dass der erste Überwachungsbereich in einem größeren Abstand vor der Frontseite des oberen Pressbalkens angeordnet ist als der zweite Überwachungsbereich. Durch die gestaffelte Distanzierung der beiden Überwachungsbereiche in einem Normalabstand vor der Frontseite des oberen Pressbalkens können so gestaffelte und zeitlich hintereinander folgende Sicherheitsmaßnahmen von der Steuervorrichtung an die Antriebseinheit der Biegepresse weitergeleitet werden. Damit kann bei einem Detektieren eines Eindringens eines Gegenstandes in den ersten Überwachungsbereich, beispielsweise die Verstellgeschwindigkeit des oberen Pressbalkens, reduziert werden. Dies kann schon ausreichen, um ein Einklemmen oder eine Beschädigung des oberen Pressbalkens oder eines daran angeordneten Bauteils zu verhindern. Wird jedoch auch ein Eindringen eines Gegenstandes in den zweiten Überwachungsbereich, welche der Frontseite näherliegend angeordnet ist, detektiert, führt dies zumeist zu einem unmittelbaren Stopp der Abwärtsbewegung des oberen Pressbalkens. Diese Befehle oder Signale werden von der Steuerungsvorrichtung an die Antriebseinheit der Biegepresse weitergeleitet.

Eine weitere mögliche Ausführungsform hat die Merkmale, dass der erste Überwachungsbereich in einer ersten Überwachungsebene und der zweite Überwachungsbereich in einer zweiten Überwachungsebene angeordnet ist, und die beiden Überwachungsebenen voneinander beabstandet angeordnet sind. Durch das Anordnen der Überwachungsbereiche in jeweils eigenen Überwachungsebenen kann so eine flächenhafte, ebenflächige Überwachungszone geschaffen werden. Jeder der Überwachungsbereiche oder jede der Überwachungszonen bildet je nach Dicke oder Stärke des Licht- oder Datensignals zwischen der Sendevorrichtung und der Erfassungs- oder Empfangsvorrichtung eine Art Vorhang aus.

Eine weitere Ausbildung sieht vor, dass die erste Überwachungsebene und die zweite Überwachungsebene der beiden Überwachungsbereiche parallel zueinander verlaufend angeordnet sind. Damit können über die Fläche der Überwachungsebenen oder Überwachungsbereiche verteilt, stets gleiche Abstände sichergestellt werden. Damit können über die gesamte Überwachungsfläche der jeweiligen Überwachungsebenen zueinander gleiche Zeitintervalle für die Steuerung der Maschine eingehalten werden.

Eine andere Ausführungsform zeichnet sich dadurch aus, dass die erste Sendevorrichtung und die zweite Sendevorrichtung am oberen Pressbalken in seinem ersten Stirnendbereich und die erste Erfassungsvorrichtung und die zweite Erfassungsvorrichtung am oberen Pressbalken in dem dem ersten Stirnendbereich gegenüberliegenden zweiten Stirnendbereich angeordnet sind. Durch das voneinander getrennte Anordnen der Sendevorrichtungen und der Erfassungsvorrichtungen jeweils in den voneinander distanzierten Stirnendbereichen des oberen Pressbalkens kann so ein einfacher Aufbau des Sicherheitssystems ermöglicht werden. Darüber hinaus kann so ein großer Freiraum ohne störende Anbauteile vor der Frontfläche des oberen Pressbalkens geschaffen werden.

Eine weitere bevorzugte Ausführungsform ist dadurch gekennzeichnet, dass die erste Sendevorrichtung und die zweite Sendevorrichtung am oberen Pressbalken im Bereich einer seiner Längsstirnseiten und die erste Erfassungsvorrichtung und die zweite Erfassungsvorrichtung am oberen Pressbalken im Bereich der dieser gegenüberliegenden Längsstirnseite angeordnet sind. Damit kann ebenfalls in jedem der Überwachungsbereiche eine einwandfreie und sichere Erkennung und Detektion des Eindringens eines Gegenstandes erfolgen und dieses Ereignis an die Steuerungsvorrichtung signalisiert werden.

Weiters kann es vorteilhaft sein, wenn die erste Sendevorrichtung und die erste Erfassungsvorrichtung in Richtung der Längserstreckung des oberen Pressbalkens voneinander distanziert an jeweils einem der Stirnendbereiche des oberen Pressbalkens an diesem angeordnet sind und dass zumindest die zweite Sendevorrichtung am oberen Pressbalken im Bereich einer der Längsstirnseiten angeordnet ist. Durch das zueinander kreuzende Anordnen der von den Sendevorrichtungen ausgesendeten Datensignale kann so eine noch sicherere Überwachung des Raumes vor der Frontseite oder Frontfläche des oberen Pressbalkens ermöglicht werden. Durch die einander kreuzende Anordnung der jeweiligen Datensignale oder Lichtstrahlen in jedem der Überwachungsbereiche kann so eine noch feinfühligere Detektion von eindringenden Gegenständen sichergestellt werden.

Eine andere alternative Ausführungsform zeichnet sich dadurch aus, dass die zweite Erfassungsvorrichtung im Bereich der gleichen Längsstirnseite am oberen Pressbalken angeordnet ist wie die zweite Sendevorrichtung oder dass die zweite Erfassungsvorrichtung am oberen Pressbalken im Bereich der der zweiten Sendevorrichtung gegenüberliegenden Längsstirnseite angeordnet ist. Damit wird durch das Vorsehen und Anordnen eines Reflektors an einer der Längsstirnseiten die Möglichkeit geschaffen, sowohl die zweite Sendevorrichtung als auch die zweite Erfassungsvorrichtung nur im Bereich der anderen Längsstirnseiten anzuordnen. Bei einer einander gegenüberliegenden Anordnung von Sendevorrichtung und Erfassungsvorrichtung kann auch so eine Unterbrechung des Datensignals, insbesondere des Lichtstrahls, erfasst und damit das Eindringen eines Gegenstandes erkannt werden.

Eine weitere mögliche und gegebenenfalls alternative Ausführungsform hat die Merkmale, dass eine dritte Sicherheitsvorrichtung mit zumindest einer dritten Sendevorrichtung und zumindest einer dritten Erfassungsvorrichtung vorgesehen ist und ein von der dritten Sicherheitsvorrichtung definierter dritter Überwachungsbereich zur Überwachung eines unmittelbaren Biegebereichs zwischen dem Biegestempel und dem Biegegesenk des Biegewerkzeugs ausgebildet ist. Durch das Vorsehen einer dritten Sicherheitsvorrichtung kann damit auch der unmittelbare Biegebereich überwacht und dadurch die Sicherheit noch zusätzlich erhöht werden.

Eine weitere Ausbildung sieht vor, dass die dritte Sicherheitsvorrichtung am oberen Pressbalken, insbesondere im Bereich seiner einander gegenüberliegenden Stirnendbereiche, angeordnet ist. Damit kann auch für den Biegebereich eine mit dem oberen Pressbalken mitfahrende dritte Sicherheitsvorrichtung geschaffen werden, um so stets die unmittelbaren Biegevorgänge und den damit verbundenen Gefahrenbereich sicher überwachen zu können.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsanlage mit einer Biegepresse und schematisch angedeutetem Sicherheitssystem, in Frontansicht;
- Fig. 2: einen oberen Pressbalken der Biegepresse mit dem vor dem Pressbalken angeordneten Sicherheitssystem, in Seitenansicht;
- Fig. 3: den oberen Pressbalken der Biegepresse mit einer weiteren Anordnungsmöglichkeit des Sicherheitssystems, in Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

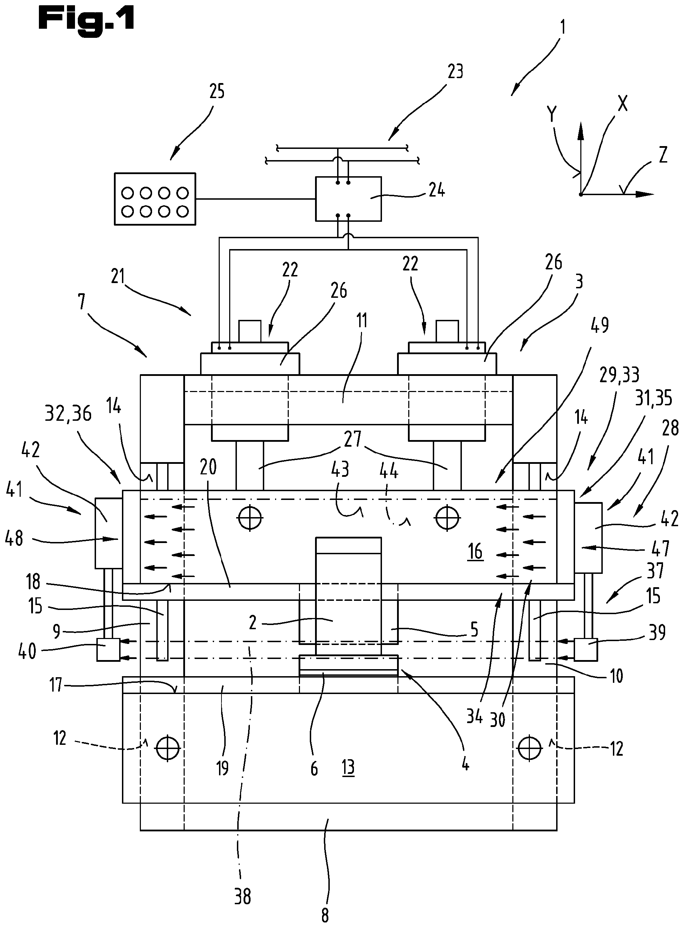

In der Fig. 1 ist eine Fertigungsanlage 1 in stark schematisch vereinfachter Darstellung gezeigt, welche im vorliegenden Fall insbesondere für das Freibiegen von aus Blech zu fertigenden Werkstücken 2 mittels Gesenkbiegen ausgebildet ist.

Die im vorliegenden Fall für das Biegen eingesetzte Fertigungsanlage 1 umfasst eine Biegemaschine, im vorliegenden Ausführungsbeispiel eine Biegepresse 3, insbesondere eine Abkantpresse oder Gesenkbiegepresse, zur Herstellung der Werkstücke 2 oder Werkteile zwischen zumindest einem relativ zueinander verstellbaren Biegewerkzeug 4. Das Biegewerkzeug 4 umfasst im vorliegenden Ausführungsbeispiel zumindest einen Biegestempel 5, zumeist jedoch mehrere Biegestempel 5, und zumindest ein Biegegesenk 6, zumeist jedoch mehrere damit zusammenwirkende Biegegesenke 6. Der zumindest eine Biegestempel 5 ist dabei oberhalb des zu fertigenden Werkstücks 2 an der Biegepresse 3 angeordnet und dort auch entsprechend gehalten, insbesondere geklemmt gehalten. Auch das zumindest eine Biegegesenk 6 ist an der Biegepresse 3 gehalten, insbesondere daran geklemmt gehalten.

Als Koordinatensystem wird bei derartigen Biegepressen 3 grundsätzliches als "X"-Richtung jene bezeichnet, welche in einer Horizontalebene sowie in senkrechter Ausrichtung bezüglich der Längserstreckung des Biegewerkzeugs 4, insbesondere dessen Biegestempel 5 sowie Biegegesenk 6 verläuft. Somit ist dies jene Richtung, welche auch der Zufuhrrichtung oder der Entnahmerichtung entspricht. Als "Y"-Richtung wird die Vertikalrichtung verstanden, welche somit in Höhenrichtung des Biegewerkzeugs 4 und weiters in senkrechter oder normaler Richtung bezüglich der Horizontalebene verläuft. Schließlich wird als "Z"-Richtung jene Richtung verstanden, welche in Längsrichtung bzw. in der Längserstreckung des Biegewerkzeugs 4, insbesondere dessen Biegestempel 5 sowie Biegegesenk 6, verläuft. Damit ist auch die Längserstreckung der vom Biegewerkzeug 4 definierten Biegekante in der "Z"-Richtung verlaufend ausgerichtet.

Ein Maschinengestell 7 der Biegepresse 3 umfasst beispielsweise eine Bodenplatte 8, auf der vertikal aufragend, zueinander in Querrichtung beabstandet und parallel zueinander ausgerichtete Seitenwangen 9, 10 angeordnet sind. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraums für das Umformen des Werkstücks 2 etwa C - förmig ausgebildet sein, wobei an Frontstirnflächen 12 von bodennahen Schenkeln der Seitenwangen 9, 10 ein feststehender, insbesondere auf der Bodenplatte 8 aufstehender, erster Pressbalken 13 oder unterer Pressbalken 13 befestigt ist. Dieser bevorzugt ortsfest angeordnete und feststehende Pressbalken 13 kann auch als Presstisch bezeichnet werden, an welchem Teile des Biegewerkzeugs 4 angeordnet und auch gehalten sind. An Frontstirnflächen 14 von von der Bodenplatte 8 entfernten Schenkeln ist in Linearführungen 15 ein zu dem den Tischbalken bildenden Pressbalken 13 relativ verstellbarer weiterer Pressbalken 16 geführt gelagert. Der Pressbalken 16 kann auch als zweiter Pressbalken oder oberer Pressbalken 16 aber auch als Druckbalken bezeichnet werden.

Auf einander gegenüberliegenden, parallel zueinander verlaufenden Längsstirnseiten 17, 18 der beiden Pressbalken 13, 16 können Werkzeugaufnahmen 19, 20 zur Bestückung mit dem oder den Biegewerkzeugen 4 angeordnet sein. Die hier obere Längsstirnseite 17 des unteren Pressbalkens 13 dient zur Abstützung des Biegegesenks 6 des Biegewerkzeugs 4. Die Längsstirnseite 18 des oberen Pressbalkens 16 bildet hier die untere Längsstirnseite desselben aus. Das oder die Biegewerkzeuge 4 können auch unter Zwischenschaltung eines nicht näher dargestellten Adapters an den Werkzeugaufnahmen 19, 20 gehalten sein, wobei dies für einen Wechselvorgang einzelner Komponenten oder des gesamten Biegewerkzeugs 4 eher als nicht günstig angesehen wird, jedoch auch eine Möglichkeit darstellen kann.

Die gezeigte Biegepresse 3 weist als Antriebsanordnung 21 für den verstellbaren Pressbalken 16, nämlich den Druckbalken, z.B. zwei mit elektrischer Energie betriebene Antriebsmittel 22 auf, die mit einer aus einem Energienetz 23 angespeisten Steuerungsvorrichtung 24 leitungsverbunden sein können. Über ein mit der Steuerungsvorrichtung 24 kommunikationsverbundenes Eingabeterminal 25 kann beispielsweise der Betrieb der Biegepresse 3, insbesondere auch der Wechselvorgang des Biegewerkzeugs 4, gesteuert werden.

Bei den Antriebsmitteln 22 kann es sich z.B. um elektromotorische Spindeltriebe 26 handeln, wie sie allgemein bekannt sind, von denen Stellmittel 27 für eine reversible Stellbewegung des durch den Druckbalken gebildeten oberen Pressbalkens 16 mit diesem, zum Beispiel antriebsverbunden sind. Unabhängig davon wäre es aber auch noch möglich, das oder die Antriebsmittel 22 durch hydraulisch und/oder pneumatisch betätigbare Stellmittel zu bilden. Dabei können Zylinder-Kolbenanordnungen Anwendung finden. Es wären aber auch andere Antriebsmittel, wie z.B. Exzenterantriebe, Kniehebelantriebe, Zahnstangenantriebe usw. denkbar.

Weiters kann die Fertigungsanlage 1 auch noch einen hier nicht näher dargestellten Manipulator umfassen, welcher von einem Vorratsstapel von zu verformenden bzw. abzukantenden Blechen zumindest ein Stück davon entnimmt und in den Arbeitsbereich bzw. die Bedienseite der Biegepresse 3 verbringt. Der Manipulator kann auch noch dazu dienen oder eingesetzt werden, den Werkzeugwechsel oder eine Lageänderung desselben durchzuführen.

Die Fertigungsanlage 1 umfasst bei diesem Ausführungsbeispiel auch noch ein Sicherheitssystem 28, um die Maschinenbedienperson vor einem Einklemmen oder einem Quetschen zwischen dem Werkstück 2 und dem Biegewerkzeug 4 und/oder einem anderem Maschinenteil, insbesondere dem oberen Pressbalken 16, zu schützen. Das Sicherheitssystem 28 kann auch als Sicherungssystem bezeichnet werden und dient zur Bewahrung oder Verhinderung von Verletzungen der Bedienperson, Beschädigungen der Biegepresse 3 sowie des herzustellenden Werkstücks 2. Das Sicherheitssystem 28 kann in Kombination mit der Biegepresse 3 und dem daran befindlichen Biegewerkzeug 4 für ein Sicherheits-Überwachungsverfahren dienen oder eingesetzt werden.

Es ist in der Fig. 1 schematisch angedeutet, dass hier zumindest jener Bereich oder Abschnitt an einer Vorderseite oder Frontseite 43 und/oder an einer Rückseite 44 des oberen Pressbalkens 16 von einer eigenen ersten Sicherheitsvorrichtung 29 oder Überwachungsvorrichtung zur Überwachung vorgesehen ist. Bevorzugt wird die Frontseite 43 bzw. die Vorderseite des oberen Pressbalkens 16 überwacht, um bei einem Hochschwenken eines Teilabschnitts des Werkstücks 2 ein Einklemmen oder Quetschen eines Körperteils der Maschinenbedienperson zwischen dem Teilabschnitt des Werkstücks 2 und dem oberen Pressbalken 16 zu vermeiden oder verhindern. Der obere Pressbalken 16 weist in Richtung seiner Längserstreckung (in "Z"-Richtung) voneinander distanziert bzw. beabstandet einen ersten Stirnendbereich 47 und einen zweiten Stirnendbereich 48 auf. In Höhenrichtung und somit in "Y"-Richtung weist der obere Pressbalken 16 eine obere Längsstirnseite 49 und die zuvor bereits beschriebene untere Längsstirnseite 18 auf, welche dem unteren Pressbalken 13 zugewendet ist.

Zu diesem möglicherweise eigenständigen Zweck ist die erste Sicherheitsvorrichtung 29 vorgesehen, welche einen ersten Überwachungsbereich 30 abdeckt und ein Eindringen von Gegenständen oder Körperteilen detektiert. Derartige Systeme oder Vorrichtungen sind zumeist auf optoelektronischer Basis aufgebaut und können als Lichtschranke bezeichnet werden. So kann die erste Sicherheitsvorrichtung 29 eine erste Sendevorrichtung 31 und eine damit zusammenwirkende erste Erfassungsvorrichtung 32 umfassen.

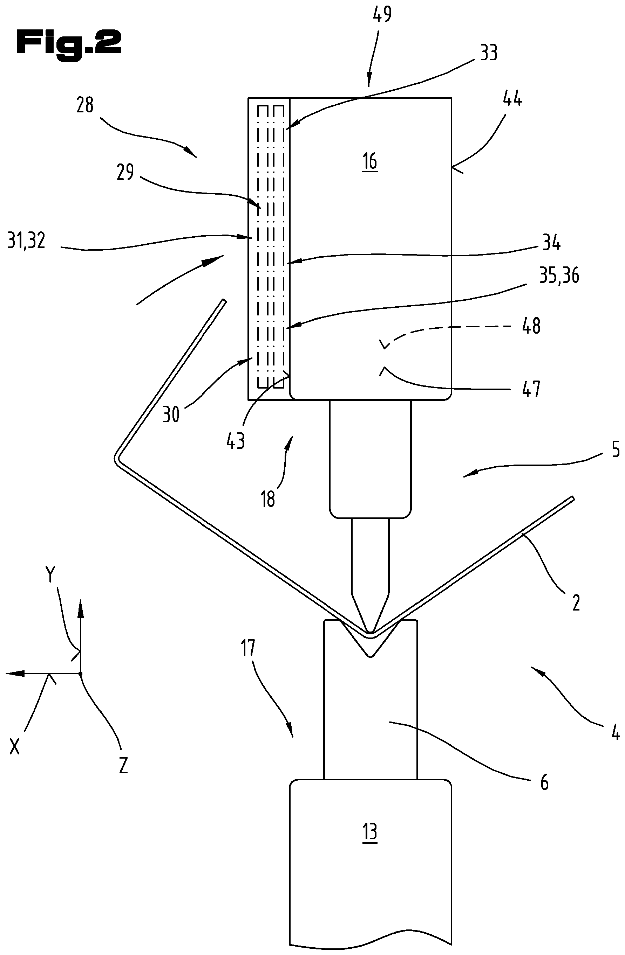

Wie nun besser aus der Darstellung der Fig. 2 in Zusammenschau mit der Fig. 1 zu ersehen ist, kann zusätzlich zur ersten Sicherheitsvorrichtung 29 unmittelbar benachbart zu dieser zumindest eine zweite Sicherheitsvorrichtung 33 vorgesehen sein. Die zumindest eine zweite Sicherheitsvorrichtung 33 ist dabei zwischen der ersten Sicherheitsvorrichtung 29 und dem oberen Pressbalken 16 angeordnet und deckt einen zweiten Überwachungsbereich 34 ab. Der erste Überwachungsbereich 30 ist in "X"-Richtung und somit in normaler Richtung auf den Pressbalken 16 gesehen, vom oberen Pressbalken 16 weiter entfernt verlaufend angeordnet als der zweite Überwachungsbereich 34. So ist der erste Überwachungsbereich 30 in einem größeren Abstand vor Vorderseite oder Frontseite 43 des oberen Pressbalkens 16 angeordnet als der dieser näherliegende zweite Überwachungsbereich 34. Der Abstand oder Distanz des zweiten Überwachungsbereichs 34 von der Frontseite 43 ist so zu wählen, dass der Betrieb der Biegepresse 3 so rasch abgeschaltet werden kann, um ein Einklemmen eines Körperteils, insbesondere eines Fingers zwischen einem hochgeklappten Teils des herzustellenden Werkstücks 2 und der Frontseite 43 bzw. der Frontfläche des oberen Pressbalkens 16 zu vermeiden. Zumeist bildet die Frontseite 43 eine überwiegend ebenflächige Fronfläche aus. Die Sicherheitsvorrichtungen 29 und 33 sowie eine nachfolgend noch beschriebene dritte Sicherheitsvorrichtung 37 können auch als Sicherungsvorrichtungen bezeichnet werden.

Es könnten aber auch noch weitere nicht näher dargestellte Sicherheitsvorrichtungen zusätzlich zur zweiten Sicherheitsvorrichtung 33 vorgesehen sein, um so eine noch gestaffeltere Überwachung bis hin zur vollständigen Abschaltung der Antriebsanordnung 21 durch die Steuerungsvorrichtung 24 ermöglichen zu können.

Die beiden Überwachungsbereiche 30, 34 sind bevorzugt in jeweils parallel zueinander verlaufenden Überwachungsebenen 45, 46 angeordnet sowie in paralleler Ausrichtung bezüglich einer vorderen Flachseite oder Frontseite 43 des oberen Pressbalkens 16. So können die beiden Überwachungsbereiche 30, 34 eine flächenhafte Form mit gegebenenfalls einer geringen Schichtdicke aufweisen. Die Überwachungsebenen 45, 46 oder die Überwachungsbereiche 30, 34 sind bevorzugt in Vertikalebenen verlaufend angeordnet. Je nach Breite oder Dicke der Lichtstrahlen und/oder der Lichtstrahlenbündel können die beiden Überwachungsbereiche 30, 34 eine Schichtdicke oder Schichtstärke in "X"-Richtung bilden oder aufweisen. Der Längsverlauf der nicht näher bezeichneten Lichtstrahlen je Überwachungsbereich 30, 34 kann parallel zueinander und/oder aber auch schräg zwischen den jeweils zusammengehörenden Sende- und Erfassungsvorrichtungen verlaufend gewählt sein.

Zur Bildung des zweiten Überwachungsbereichs 34 der zweiten Sicherheitsvorrichtung 33 ist eine zweite Sendevorrichtung 35 und eine zweite Erfassungsvorrichtung 36 vorgesehen.

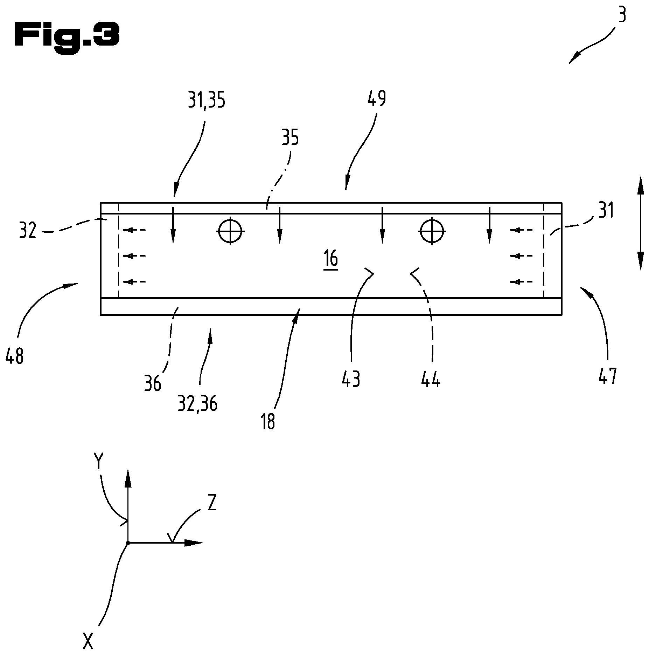

Es wäre aber auch noch möglich, die erste Sendevorrichtung 31 und die zweite Sendevorrichtung 35 sowie die erste Erfassungsvorrichtung 32 und die zweite Erfassungsvorrichtung 36 nicht seitlich bezüglich der Längserstreckung des oberen Pressbalkens 16 an diesem anzuordnen, sondern oberhalb und/oder unterhalb desselben. Damit kann bei einer voneinander beabstandeten Anordnung der Sendevorrichtungen 31, 35 und der Erfassungsvorrichtungen 32, 36 eine in vertikaler Richtung übereinander Anordnung erzielt werden, wie dies in der Fig. 3 vereinfacht bei einem alleinig dargestellten oberen Pressbalken 16 gezeigt ist.

Unabhängig davon wäre es aber auch noch möglich, die erste und zweite Sendevorrichtung 31 und 35 sowie die erste und zweite Erfassungsvorrichtung 32 und 36 gemeinsam entweder an einem der Oberseite, nämlich der oberen Längsstirnseite 49, des oberen Pressbalkens 16 oder der Unterseite, nämlich der unteren Längsstirnseite 18, des oberen Pressbalkens 16 befindlichen Längsrandbereich anzuordnen.

Es wäre aber auch noch möglich, dass z.B. die hier in "X"-Richtung weiter vom oberen Pressbalken 16 beabstandet angeordnete erste Sendevorrichtung 31 und die erste Erfassungsvorrichtung 32 zur Ausbildung des ersten Überwachungsbereichs 30 an zumindest einem seitlich bezüglich der Längserstreckung des oberen Pressbalkens 16 befindlichen Stirnendbereich 47, 48 angeordnet sind. Damit kann eine in etwa in "Z"-Richtung - also in Richtung der Längserstreckung des oberen Pressbalkens 16 bzw. der Biegekante - verlaufende Senderichtung der Lichtstrahlen erzielt werden. Die zweite Sendevorrichtung 35 und die zweite Erfassungsvorrichtung 36 können dazu um 90° versetzt angeordnet werden, wie dies im Ausführungsbeispiel der Fig. 3 gezeigt und beschrieben ist.

In der Fig. 1 ist noch eine weitere mögliche Anordnung gezeigt, wobei die zweite Sendevorrichtung 35 und die zweite Erfassungsvorrichtung 36 gemeinsam nur an der vom Biegestempel 5 abgewendeten oberen Längsstirnseite 49 des oberen Pressbalkens 16 in strichpunktierten Linien angedeutet sind. Es ist aber auch eine in Richtung der Höhe des oberen Pressbalkens 16 - in "Y"-Richtung - voneinander beabstandete Anordnung von der zweiten Sendevorrichtung 35 und der zweiten Erfassungsvorrichtung 36 möglich. Damit kann der zweite Überwachungsbereich 34 näher bezüglich einer Frontseite 43 des oberen Pressbalkens 16 angeordnet sein. Durch diese zueinander kreuzweise oder um 90° zueinander versetzte Anordnung der ersten Sendevorrichtung 31 und der zweiten Sendevorrichtung 35 kann so in den Überwachungsbereichen 30 und 34 eine sich kreuzende Senderichtung der Datensignale, insbesondere der Lichtstrahlen, erzielt werden. Damit kann eine noch bessere und lückenlosere Überwachung erzielt werden, wodurch sie Sicherheit zusätzlich erhöht werden kann.

Weiters kann auch noch der unmittelbare Biegebereich des Werkstücks 2 zwischen dem Biegewerkzeug 4 mit seinem Biegestempel 5 und Biegegesenk 6 überwacht werden, wie dies vereinfacht in der Fig. 1 noch dargestellt ist.

Dazu kann das Sicherheitssystem 28 eine dritte Sicherheitsvorrichtung 37 umfassen, welche den unmittelbaren Biegebereich zwischen dem oder den Biegestempeln 5 und dem oder den Biegegesenken 6 des Biegewerkzeugs 4 überwacht. Damit wird im Bereich der Längserstreckung der vom Biegestempel 5 definierten Biegekante ein dritter Überwachungsbereich 38 definiert, welcher in der Fig. 1 als Flächenelement dargestellt worden ist. Die dritte Sicherheitsvorrichtung 37 dient insbesondere zur Kontrolle und Überwachung des Biegevorgangs und/oder ob im Arbeitsbereich des oder der Biegewerkzeuge 4 sich ein Gegenstand, insbesondere ein Körperteil einer Bedienperson, befindet. Mittels der dritten Sicherheitsvorrichtung 37 kann somit überwacht werden, ob sich z.B. die Hand der Maschinenbedienperson oder des Maschinenbedieners im Gefahrenbereich zwischen dem Biegestempel 5 und dem damit zusammenwirkenden Biegegesenk 6 befindet. Ist dies der Fall, wird von der dritten Sicherheitsvorrichtung 37 des Sicherheitssystems 28 die aufeinander Zubewegung des Biegewerkzeugs 4, insbesondere die Abwärtsbewegung des oberen Pressbalkens 16 hin in Richtung auf den unteren Pressbalken 13, gestoppt. Damit kann ein Einklemmen von einem Körperteil und eine damit einhergehende Verletzung in diesem dritten Überwachungsbereich 38 verhindert werden.

Derartige Systeme basieren zumeist auf einer optoelektronischen Basis. Dabei werden optische Datensignale, wie Lichtstrahlen, insbesondere Laserstrahlen, von der oder den Sendevorrichtungen 31, 35 ausgesendet und von der oder den damit jeweils zusammenwirkenden Erfassungsvorrichtungen 32, 36 erfasst. Die erste und zweite Erfassungsvorrichtung 32, 36 sind hier als optische Erfassungsmittel ausgebildet und können auch als Empfangsvorrichtung bezeichnet werden, welche jeweils den von der ersten und zweiten Sendevorrichtung 31, 35 als optisches Datensignal, insbesondere als Lichtquelle, ausgesendeten oder emittierten zumindest einen Strahl empfängt oder auffängt und nachfolgend gegebenenfalls auswertet.

Die dritte Sicherheitsvorrichtung 37 ist vereinfacht durch eine bezüglich des Maschinengestells 7 rechtsseitig befindliche dritte Sendevorrichtung 39 und eine linksseitig befindliche dritte Erfassungsvorrichtung 40 dargestellt. Damit sind die zumindest eine dritte Sendevorrichtung 39 und die zumindest eine damit zusammenwirkende dritte Erfassungsvorrichtung 40 in Längserstreckung der Werkzeugaufnahmen 19, 20 oder der Pressbalken 13, 16 voneinander beabstandet angeordnet. Die dritte Erfassungsvorrichtung 40 ist hier als optisches Erfassungsmittel ausgebildet und kann auch als Empfangsvorrichtung bezeichnet werden, welche den von der dritten Sendevorrichtung 39 als Lichtquelle ausgesendeten oder emittierten zumindest einen Lichtstrahl empfängt oder auffängt und nachfolgend gegebenenfalls auswertet. Zur Befestigung der dritten Sendevorrichtung 39 und der dritten Erfassungsvorrichtung 40 am oberen Pressbalken 16 kann eine Befestigungseinheit 41 mit je einer Befestigungsvorrichtung 42 vorgesehen sein. Der Aufbau beider Befestigungsvorrichtungen 42 kann grundsätzlich zueinander gleich gewählt werden.

Damit wird bei einer relativen Verstellbewegung des oberen Pressbalkens 16 zumindest sowohl die dritte Sendevorrichtung 39 als auch die dritte Erfassungsvorrichtung 40 ständig mitbewegt. Von der dritten Sendevorrichtung 39 werden zumeist mehrere Lichtstrahlen, insbesondere Laserstrahlen, ausgesendet, welche von der dritten Erfassungsvorrichtung 40 aufgenommen und erfasst werden. Dieses Prinzip ist grundsätzlich als bekannt anzusehen, wodurch hier nicht mehr näher darauf eingegangen wird. Bei Unterbrechung von zumindest einem der Lichtstrahlen wird die Verstellbewegung der Biegepresse 3 gestoppt. Die Position der abgegebenen Lichtstrahlen ist in Abhängigkeit von der Arbeitslänge des Biegewerkzeugs 4, insbesondere des für den Biegevorgang vorgesehenen Biegestempels 5, einzustellen.

Eine Relativbewegung zwischen dem oberen Pressbalken 16 und der dritten Sendevorrichtung 39 sowie der dritten Erfassungsvorrichtung 40 ist grundsätzlich nur zu Einstell- und/oder Justiertätigkeiten vorgesehen. Derartige Einstell- und/oder Justiertätigkeiten sind z.B. dann erforderlich, wenn aufgrund eines Werkzeugwechsels eine geänderte Arbeitslänge des Biegestempels 5 vorliegt. Die Position des oder der Lichtstrahlen ist zumeist in einem vordefinierten Abstand unterhalb der Arbeitskante oder Biegekante des jeweiligen für den Biegevorgang vorgesehenen Biegestempels 5 gewählt.

Die Anordnung und Halterung der dritten Sicherheitsvorrichtung 37 des Sicherheitssystems 28, insbesondere der dritten Sendevorrichtung 39 sowie der dritten Erfassungsvorrichtung 40, am oberen Pressbalken 16 erfolgt mittels der Befestigungseinheit 41 jeweils mit einer im Stirnendbereich 47, 48 bzw. im stirnseitigen Endbereich desselben befindlichen Befestigungsvorrichtung 42, welche hier nur schematisch angedeutet sind. Die beiden Stirnendbereiche 47, 48 oder Längsenden des oberen Pressbalken 16 sind in Richtung von dessen Längserstreckung voneinander distanziert angeordnet.

Es wäre aber auch möglich, die zweite Sendevorrichtung 35 und die zweite Erfassungsvorrichtung 36 gemeinsam an nur einer Seite des oberen Pressbalkens 16 anzuordnen und auf der in "Z"-Richtung gegenüberliegenden anderen Seite einen Reflektor vorzusehen. Damit kann der oder können die von der zweiten Sendevorrichtung 35 ausgesendeten Lichtstrahlen reflektiert und an die zweite Erfassungsvorrichtung 36 zurück übermittelt werden.

Die zuvor beschriebenen Sicherheitsvorrichtungen 29, 33 und 37 können mit der Steuerungsvorrichtung 24 kommunikationsverbunden sein. Diese Kommunikationsverbindung kann auf Leitungsbasis, drahtloser Kommunikation oder dergleichen erfolgen.

Durch das Vorsehen des ersten und zweiten Überwachungsbereichs 30, 34, welche auch als Erkennungsfelder bezeichnet werden können, sowie deren zueinander unterschiedliche Distanzierung oder Beabstandung von der Frontseite 43 des oberen Pressbalkens 16, können damit nach Erkennung eines Eintritts eines Gegenstandes und/oder Körperteils in einen der jeweiligen Überwachungsbereiche 30, 34 unterschiedliche Maßnahmen von der Steuerungsvorrichtung 24 ausgelöst und/oder bewirkt werden.

Wird von der in einem größeren Abstand vor der Frontseite 43 angeordneten ersten Sicherheitsvorrichtung 29 mit deren ersten Überwachungsbereich 30 ein Eintritt eines Gegenstandes, wie z.B. ein Blechteil, eine Biegehilfe und/oder eines Körperteils detektiert, wird ein erstes Signal generiert und diese an die Steuerungsvorrichtung 24 weitergeleitet. Damit kann von der Steuerungsvorrichtung 24 in einem ersten Schritt die Verstellgeschwindigkeit des oberen Pressbalkens 16 hin in Richtung auf den unteren Pressbalken 13 oder Presstisch bezüglich einer in der Steuerungsvorrichtung 24 hinterlegten oder voreingestellten Verstellgeschwindigkeit oder einer von der Steuerungsvorrichtung 24 vorgegebenen üblichen Verstellgeschwindigkeit verringert werden. So kann bei einem Hochschwenken eines Teilabschnitts oder Schenkels des herzustellenden Werkstücks 2 die Winkelgeschwindigkeit, mit welcher sich dieser Teilabschnitt in Richtung auf die Frontseite 43 des oberen Pressbalkens 16 bewegt, reduziert werden.

Wie aus der Fig. 2 zu ersehen ist, ist die zweite Sicherheitsvorrichtung 33 mit dem von dieser definierten oder ausgebildeten zweiten Überwachungsbereich 34 ebenfalls vor der Frontseite 43 des oberen Pressbalkens 16 verlaufend angeordnet. Wird nachfolgend auch von der zweiten Sicherheitsvorrichtung 33 ein Eintritt eines Gegenstandes und/oder Körperteils in den zweiten Überwachungsbereich 34 detektiert, wird ein zweites Signal generiert und dieses Ereignis als zweites Signal an die Steuerungsvorrichtung 24 bekannt gegeben. Dabei wird von der Steuerungsvorrichtung 24 ein Not-Haltebefehl generiert und die Antriebsanordnung 21 zumindest unmittelbar stillgesetzt. Damit wird eine weitere Abwärtsbewegung des oberen Pressbalkens 16 hin in Richtung auf den unteren Pressbalken 13 unmittelbar gestoppt und es wird der weitere Biegevorgang abgebrochen. Zusätzlich und/oder gleichzeitig mit dem Generieren und Weiterleiten des Not-Haltebefehls an die Antriebsanordnung 21 kann auch von der Steuerungsvorrichtung 24 ein Rückstellbefehl zum Anheben des oberen Pressbalkens 16 auf die vom unteren Pressbalken 13 abgewendete Verstellrichtung an die Antriebsanordnung 21 weitergeleitet werden.

Die Aktivierung zumindest der ersten Sicherheitsvorrichtung 29 und/oder der zweiten Sicherheitsvorrichtung 33 erfolgt durch die Steuerungsvorrichtung 24. Die Aktivierung zumindest einer der Sicherheitsvorrichtungen 29, 33 soll nur am Beginn der Abwärtsbewegung erfolgen und zumindest während der Abwärtsbewegung des oberen Pressbalkens 16 aktiv sein. Die Abwärtsbewegung und damit verbunden der Beginn des Biegevorgangs wird üblicher Weise mit einem Startbefehl oder Eingabebefehl (Ab-Taster) am Eingabeterminal 25 gestartet. Die Eingabe erfolgt zumeist manuell von einer Maschinenbedienperson, wobei auch eine Zweihand-Sicherheitsbedienung oder Zweihand-Eingabe erforderlich sein kann. Damit wird sichergestellt, dass nur bei Durchführung eines Biegevorgangs die Sicherheitsvorrichtung 29 und/oder 33 aktiv ist.

Durch das Vorsehen der Überwachung zumindest des Frontbereichs des oberen Pressbalkens 16 können so unterschiedlichste Vorteile erzielt werden. Dabei kann ein Verletzungsschutz von Personen, Beschädigungen des oberen Pressbalkens 16 bzw. Druckbalkens, Deformierungen des Werkstücks 2, ein Schutz von externen Peripherieeinheiten, ein Schutz vor Zerstörung der Biegehilfe und/oder ein Performancegewinn durch die Überwachung der Scher und Quetschstellen erzielt werden.

Das Verfahren zur Überwachung des Gefahrenbereichs der Fertigungsanlage 1 zum Freibiegen oder Prägebiegen von dem aus dem Blech zu fertigenden Werkstück 2 mittels der Biegepresse 3 vor deren oberen Pressbalken 16 umfasst zumindest folgende Schritte:
- Bereitstellen der Biegepresse 3, insbesondere einer Abkantpresse, mit dem Maschinengestell 7, dem unteren Pressbalken 13, dem oberen Pressbalken 16 sowie den an den Pressbalken 13, 16 angeordneten oder ausgebildeten Werkzeugaufnahmen 19, 20, wobei der obere Pressbalken 16 die Frontseite 43, die Rückseite 44, den ersten Stirnendbereich 47, den zweiten Stirnendbereich 48 sowie die obere Längsstirnseite 49 und die untere Längsstirnseite 18 aufweist,
- Bereitstellen zumindest eines Biegewerkzeugs 4 mit zumindest einem Biegestempel 5 und zumindest einem Biegegesenk 6,
- Bereitstellen des Sicherheitssystem 28 mit zumindest einer Sicherheitsvorrichtung 29, 33, 37 umfassend zumindest eine Sendevorrichtung 31, 35, 39 und zumindest eine Erfassungsvorrichtung 32, 36, 40, wobei von der zumindest einen Sicherheitsvorrichtung 29, 33, 37 ein Überwachungsbereich 30, 34, 38 definiert wird,
- Bereitstellen der Steuerungsvorrichtung 24 und des Eingabeterminal 25, wobei das Sicherheitssystem 28 und das Eingabeterminal 25 mit der Steuerungsvorrichtung 24 kommunikationsverbunden sind, und dabei
- von der ersten Sicherheitsvorrichtung 29 des Sicherheitssystems 28 ein erster Überwachungsbereich 30 definiert wird, und der erste Überwachungsbereich 30 derart vor der Frontseite 43 des oberen Pressbalkens 16 angeordnet wird, dass bei einem Eintritt eines Gegenstandes in den ersten Überwachungsbereich 30 ein erstes Signal von der ersten Sicherheitsvorrichtung 29 generiert und an die Steuerungsvorrichtung 24 weitergeleitet wird.

Weitere Verfahrensschritte sind zuvor bereits bei der Beschreibung der Fertigungsanlage 1 in Verbindung mit dem Sicherheitssystem 28 beschrieben worden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | erste Sendevorrichtung |
| 2 | Werkstück | 32 | erste Erfassungsvorrichtung |
| 3 | Biegepresse | 33 | zweite Sicherheitsvorrichtung |
| 4 | Biegewerkzeug | 34 | zweiter Überwachungsbereich |
| 5 | Biegestempel | 35 | zweite Sendevorrichtung |
| 6 | Biegegesenk | 36 | zweite Erfassungsvorrichtung |
| 7 | Maschinengestell | 37 | dritte Sicherheitsvorrichtung |
| 8 | Bodenplatte | 38 | dritter Überwachungsbereich |
| 9 | Seitenwange | 39 | dritte Sendevorrichtung |
| 10 | Seitenwange | 40 | dritte Erfassungsvorrichtung |
| 11 | Querverband | 41 | Befestigungseinheit |
| 12 | Frontstirnfläche | 42 | Befestigungsvorrichtung |
| 13 | Pressbalken | 43 | Frontseite |
| 14 | Frontstirnfläche | 44 | Rückseite |
| 15 | Linearführung | 45 | erste Überwachungsebene |
| 16 | Pressbalken | 46 | zweite Überwachungsebene |
| 17 | obere Längsstirnseite | 47 | erster Stirnendbereich |
| 18 | untere Längsstirnseite | 48 | zweiter Stirnendbereich |
| 19 | Werkzeugaufnahme | 49 | obere Längsstirnseite |
| 20 | Werkzeugaufnahme | | |
| 21 | Antriebsanordnung | | |
| 22 | Antriebsmittel | | |
| 23 | Energienetz | | |
| 24 | Steuerungsvorrichtung | | |
| 25 | Eingabeterminal | | |
| 26 | Spindeltrieb | | |
| 27 | Stellmittel | | |
| 28 | Sicherheitssystem | | |
| 29 | erste Sicherheitsvorrichtung | | |
| 30 | erster Überwachungsbereich | | |

## Patentansprüche

1. Verfahren zur Überwachung eines Gefahrenbereichs einer Fertigungsanlage (1) zum Freibiegen oder Prägebiegen von einem aus einem Blech zu fertigenden Werkstück (2) mittels einer Biegepresse (3) vor deren oberen Pressbalken (16), umfassend folgende Schritte:
- Bereitstellen der Biegepresse (3), insbesondere einer Abkantpresse, mit einem Maschinengestell (7), einem unteren Pressbalken (13), einem oberen Pressbalken (16) sowie an den Pressbalken (13, 16) angeordneten oder ausgebildeten Werkzeugaufnahmen (19, 20), wobei der obere Pressbalken (16) eine Frontseite (43), eine Rückseite (44), einen ersten Stirnendbereich (47), einen zweiten Stirnendbereich (48) sowie eine obere Längsstirnseite (49) und eine untere Längsstirnseite (18) aufweist,
- Bereitstellen zumindest eines Biegewerkzeugs (4) mit zumindest einem Biegestempel (5) und zumindest einem Biegegesenk (6),
- Bereitstellen eines Sicherheitssystems (28) mit zumindest einer Sicherheitsvorrichtung (29, 33, 37) umfassend zumindest eine Sendevorrichtung (31, 35, 39) und zumindest eine Erfassungsvorrichtung (32, 36, 40), wobei von der zumindest einen Sicherheitsvorrichtung (29, 33, 37) ein Überwachungsbereich (30, 34, 38) definiert wird, und dabei
- von einer ersten Sicherheitsvorrichtung (29) des Sicherheitssystems (28) mit deren ersten Sendevorrichtung (31) und ersten Erfassungsvorrichtung (32) ein erster Überwachungsbereich (30) definiert wird, wobei die erste Sendevorrichtung (31) und die erste Erfassungsvorrichtung (32) am oberen Pressbalken (16) angeordnet sind, und der erste Überwachungsbereich (30) derart vor der Frontseite (43) des oberen Pressbalkens (16) angeordnet wird, dass bei einem Eintritt eines Gegenstandes in den ersten Überwachungsbereich (30) ein erstes Signal von der ersten Sicherheitsvorrichtung (29) generiert und an eine Steuerungsvorrichtung (24) weitergeleitet wird,
- Bereitstellen der Steuerungsvorrichtung (24) und eines Eingabeterminals (25), wobei das Sicherheitssystem (28) und das Eingabeterminal (25) mit der Steuerungsvorrichtung (24) kommunikationsverbunden sind,
**dadurch gekennzeichnet**, - dass eine zweite Sicherheitsvorrichtung (33) mit einer zweiten Sendevorrichtung (35) und einer zweiten Erfassungsvorrichtung (36) bereitgestellt wird, wobei von der zweiten Sicherheitsvorrichtung (33) ein zweiter Überwachungsbereich (34) definiert wird, und die zweite Sendevorrichtung (35) und die zweite Erfassungsvorrichtung (36) ebenfalls am oberen Pressbalken (16) angeordnet sind,
- dass der zweite Überwachungsbereich (34) ebenfalls vor der Frontseite (43) des oberen Pressbalkens (16) und unmittelbar benachbart zur ersten Sicherheitsvorrichtung (29) sowie zwischen der ersten Sicherheitsvorrichtung (29) und dem oberen Pressbalken (16) verlaufend angeordnet ist, und
- dass bei einem Eintritt eines Gegenstandes in den zweiten Überwachungsbereich (34) ein zweites Signal von der zweiten Sicherheitsvorrichtung (33) generiert und an die Steuerungsvorrichtung (24) weitergeleitet wird.

2. Verfahren nach Anspruch 1, **dadurch gekennzeichnet, dass** von der Steuerungsvorrichtung (24) bei Erhalt des ersten Signals die Verstellgeschwindigkeit des oberen Pressbalkens (16) hin in Richtung auf den unteren Pressbalken (13) bezüglich einer voreingestellten oder von der Steuerungsvorrichtung (24) vorgegebenen Verstellgeschwindigkeit verringert wird.

3. Verfahren nach Anspruch 1, **dadurch gekennzeichnet, dass** von der Steuerungsvorrichtung (24) bei Erhalt des zweiten Signals ein Not-Haltebefehl generiert wird und die Verstellbewegung des oberen Pressbalkens (16) hin in Richtung auf den unteren Pressbalken (13) gestoppt wird.

4. Verfahren nach einem der Ansprüche 1 bis 3, **dadurch gekennzeichnet, dass** die zumindest eine erste Sicherheitsvorrichtung (29) erst bei einer Eingabe eines Startbefehls für den Beginn des Biegevorgangs von der Steuerungsvorrichtung (24) aktiviert wird und/oder dass die zumindest eine zweite Sicherheitsvorrichtung (33) erst bei einer Eingabe eines Startbefehls für den Beginn des Biegevorgangs von der Steuerungsvorrichtung (24) aktiviert wird.

5. Fertigungsanlage (1) zum Freibiegen oder Prägebiegen von einem aus einem Blech zu fertigenden Werkstück (2) mittels einer Biegepresse (3), insbesondere zur Durchführung des Verfahrens nach einem der vorhergehenden Ansprüche, umfassend
- die Biegepresse (3), insbesondere eine Abkantpresse, mit einem Maschinengestell (7), einem unteren Pressbalken (13), einem oberen Pressbalken (16) sowie an den Pressbalken (13, 16) angeordneten oder ausgebildeten Werkzeugaufnahmen (19, 20), wobei der obere Pressbalken (16) eine Frontseite (43), eine Rückseite (44), einen ersten Stirnendbereich (47), einen zweiten Stirnendbereich (48) sowie eine obere Längsstirnseite (49) und eine untere Längsstirnseite (18) aufweist,
- zumindest ein Biegewerkzeug (4) mit zumindest einem Biegestempel (5) und zumindest einem Biegegesenk (6),
- ein Sicherheitssystem (28) mit zumindest einer Sicherheitsvorrichtung (29, 33, 37) umfassend zumindest eine Sendevorrichtung (31, 35, 39) und zumindest eine Erfassungsvorrichtung (32, 36, 40), wobei von der zumindest einen Sicherheitsvorrichtung (29, 33, 37) ein Überwachungsbereich (30, 34, 38) definiert ist, und dabei
- von einer ersten Sicherheitsvorrichtung (29) mit deren ersten Sendevorrichtung (31) und ersten Erfassungsvorrichtung (32) des Sicherheitssystems (28) ein erster Überwachungsbereich (30) definierter ist, wobei die erste Sendevorrichtung (31) und die erste Erfassungsvorrichtung (32) am oberen Pressbalken (16) angeordnet sind, und der erste Überwachungsbereich (30) vor der Frontseite (43) des oberen Pressbalkens (16) verlaufend angeordnet ist,
- eine Steuerungsvorrichtung (24) und ein Eingabeterminal (25), wobei das Sicherheitssystem (28) und das Eingabeterminal (25) mit der Steuerungsvorrichtung (24) kommunikationsverbunden sind,
**dadurch gekennzeichnet,**
- **dass** eine zweite Sicherheitsvorrichtung (33) mit einer zweiten Sendevorrichtung (35) und einer zweiten Erfassungsvorrichtung (36) vorgesehen ist, wobei von der zweiten Sicherheitsvorrichtung (33) ein zweiter Überwachungsbereich (34) definiert ist, und die zweite Sendevorrichtung (35) und die zweite Erfassungsvorrichtung (36) ebenfalls am oberen Pressbalken (16) angeordnet sind, und
- **dass** der zweite Überwachungsbereich (34) ebenfalls vor der Frontseite (43) des oberen Pressbalkens (16) und unmittelbar benachbart zur ersten Sicherheitsvorrichtung (29) sowie zwischen der ersten Sicherheitsvorrichtung (29) und dem oberen Pressbalken (16) verlaufend angeordnet ist.

6. Fertigungsanlage (1) nach Anspruch 5, **dadurch gekennzeichnet, dass** der erste Überwachungsbereich (30) in einem größeren Abstand vor der Frontseite (43) des oberen Pressbalkens (16) angeordnet ist als der zweite Überwachungsbereich (34).

7. Fertigungsanlage (1) nach einem der Ansprüche 5 oder 6, **dadurch gekennzeichnet, dass** der erste Überwachungsbereich (30) in einer ersten Überwachungsebene (45) und der zweite Überwachungsbereich (34) in einer zweiten Überwachungsebene (46) angeordnet ist, und die beiden Überwachungsebenen (45, 46) voneinander beabstandet angeordnet sind.

8. Fertigungsanlage (1) nach Anspruch 7, **dadurch gekennzeichnet, dass** die erste Überwachungsebene (45) und die zweite Überwachungsebene (46) der beiden Überwachungsbereiche (30, 34) parallel zueinander verlaufend angeordnet sind.

9. Fertigungsanlage (1) nach einem der Ansprüche 5 bis 8, **dadurch gekennzeichnet, dass** die erste Sendevorrichtung (31) und die zweite Sendevorrichtung (35) am oberen Pressbalken (16) in seinem ersten Stirnendbereich (47) und die erste Erfassungsvorrichtung (32) und die zweite Erfassungsvorrichtung (36) am oberen Pressbalken (16) in dem dem ersten Stirnendbereich (47) gegenüberliegenden zweiten Stirnendbereich (48) angeordnet sind.

10. Fertigungsanlage (1) nach einem der Ansprüche 5 bis 8, **dadurch gekennzeichnet, dass** die erste Sendevorrichtung (31) und die zweite Sendevorrichtung (35) am oberen Pressbalken (16) im Bereich einer seiner Längsstirnseiten (18, 49) und die erste Erfassungsvorrichtung (32) und die zweite Erfassungsvorrichtung (36) am oberen Pressbalken (16) im Bereich der dieser gegenüberliegenden Längsstirnseite (49, 18) angeordnet sind.

11. Fertigungsanlage (1) nach einem der Ansprüche 5 bis 8, **dadurch gekennzeichnet, dass** die erste Sendevorrichtung (31) und die erste Erfassungsvorrichtung (32) in Richtung der Längserstreckung des oberen Pressbalkens (16) voneinander distanziert an jeweils einem der Stirnendbereiche (47, 48) des oberen Pressbalkens (16) an diesem angeordnet sind und dass zumindest die zweite Sendevorrichtung (35) am oberen Pressbalken (16) im Bereich einer der Längsstirnseiten (18, 49) angeordnet ist.

12. Fertigungsanlage (1) nach Anspruch 11, **dadurch gekennzeichnet, dass** die zweite Erfassungsvorrichtung (36) im Bereich der gleichen Längsstirnseite (18, 49) am oberen Pressbalken (16) angeordnet ist wie die zweite Sendevorrichtung (35) oder dass die zweite Erfassungsvorrichtung (36) am oberen Pressbalken (16) im Bereich der der zweiten Sendevorrichtung (35) gegenüberliegenden Längsstirnseite (49, 18) angeordnet ist.

13. Fertigungsanlage (1) nach einem der Ansprüche 5 bis 12, **dadurch gekennzeichnet, dass** eine dritte Sicherheitsvorrichtung (37) mit zumindest einer dritten Sendevorrichtung (39) und zumindest einer dritten Erfassungsvorrichtung (40) vorgesehen ist und ein von der dritten Sicherheitsvorrichtung (37) definierter dritter Überwachungsbereich (38) zur Überwachung eines unmittelbaren Biegebereichs zwischen dem Biegestempel (5) und dem Biegegesenk (6) des Biegewerkzeugs (4) ausgebildet ist.

14. Fertigungsanlage (1) nach Anspruch 13, **dadurch gekennzeichnet, dass** die dritte Sicherheitsvorrichtung (37) am oberen Pressbalken (16), insbesondere im Bereich seiner einander gegenüberliegenden Stirnendbereiche (47, 48), angeordnet ist.

## Claims

1. A method for observing a hazard area of a production plant (1) for air bending or coin bending of a workpiece (2) to be made from a sheet metal by means of a bending press (3) in front of its upper press beam (16), comprising the following steps:
- providing the bending press (3), in particular a press brake, with a machine frame (7), a lower press beam (13), an upper press beam (16) and tool holders (19, 20) arranged or formed on the press beams (13, 16), wherein the upper press beam (16) has a front side (43), a rear side (44), a first end face region (47), a second end face region (48) as well as an upper longitudinal end face (49) and a lower longitudinal end face (18),
- providing at least one bending tool (4) with at least one bending punch (5) and at least one bending die (6),
- providing a safety system (28) with at least one safety device (29, 33, 37) comprising at least one transmission device (31, 35, 39) and at least one detection device (32, 36, 40), wherein an observation region (30, 34, 38) is defined by the at least one safety device (29, 33, 37), and in the course of this,
- a first observation region (30) is defined by a first safety device (29) of the safety system (28) with its first transmission device (31) and first detection device (32), wherein the first transmission device (31) and the first detection device (32) are arranged on the upper press beam (16), and the first observation region (30) is arranged in front of the front side (43) of the upper press beam (16), such that, when an object enters into the first observation region (30), a first signal is generated by the first safety device (29) and forwarded to a controller (24),
- providing the controller (24) and an input terminal (25), wherein the safety system (28) and the input terminal (25) are communication-connected to the controller (24),
**characterized in that**,
- a second safety device (33) with a second transmission device (35) and a second detection device (36) is provided, wherein a second observation region (34) is defined by the second safety device (33), and the second transmission device (35) and the second detection device (36) are also arranged on the upper press beam (16),
- the second observation region (34) is also arranged in front of the front side (43) of the upper press beam (16) and immediately adjacent to the first safety device (29) and so as to run between the first safety device (29) and the upper press beam (16), and
- when an object enters into the second observation region (34), a second signal is generated by the second safety device (33) and is forwarded to the controller (24).

2. The method according to claim 1, **characterized in that**, when the controller (24) receives the first signal, it decreases the adjustment speed of the upper press beam (16) in the direction toward the lower press beam (13) with respect to a preset adjustment speed or one that is predetermined by the controller (24).

3. The method according to claim 1, **characterized in that**, when the controller (24) receives the second signal, it generates an emergency stop command, and the adjustment movement of the upper press beam (16) in the direction toward the lower press beam (13) is stopped.

4. The method according to one of claims 1 to 3, **characterized in that** the at least one first safety device (29) is activated by the controller (24) only upon entry of a starting command for starting the bending operation, and/or **in that** the at least one second safety device (33) is activated by the controller (24) only upon entry of a starting command for starting the bending operation.

5. A production plant (1) for air bending or coin bending of a workpiece (2) to be made from a sheet metal, by means of a bending press (3), in particular for performing the method according to one of the preceding claims, comprising
- the bending press (3), in particular a press brake, with a machine frame (7), a lower press beam (13), an upper press beam (16) and tool holders (19, 20) arranged or formed on the press beams (13, 16), wherein the upper press beam (16) has a front side (43), a rear side (44), a first end face region (47), a second end face region (48) as well as an upper longitudinal end face (49) and a lower longitudinal end face (18),
- at least one bending tool (4) with at least one bending punch (5) and at least one bending die (6),
- a safety system (28) with at least one safety device (29, 33, 37) comprising at least one transmission device (31, 35, 39) and at least one detection device (32, 36, 40), wherein an observation region (30, 34, 38) is defined by the at least one safety device (29, 33, 37), and in the course of this,
- a first observation region (30) is defined by a first safety device (29) with its first transmission device (31) and first detection device (32) of the safety system (28), wherein the first transmission device (31) and the first detection device (32) are arranged on the upper press beam (16), and the first observation region (30) is arranged so as to run in front of the front side (43) of the upper press beam (16),
- a controller (24) and an input terminal (25), wherein the safety system (28) and the input terminal (25) are communication-connected to the controller (24),
**characterized in that**,
- a second safety device (33) with a second transmission device (35) and a second detection device (36) is provided, wherein a second observation region (34) is defined by the second safety device (33), and the second transmission device (35) and the second detection device (36) are also arranged on the upper press beam (16), and
- the second observation region (34) is also arranged in front of the front side (43) of the upper press beam (16) and immediately adjacent to the first safety device (29) and so as to run between the first safety device (29) and the upper press beam (16).

6. The production plant (1) according to claim 5, **characterized in that** the first observation region (30) is arranged at a greater distance from the front side (43) of the upper press beam (16) than the second observation region (34).

7. The production plant (1) according to one of claims 5 or 6, **characterized in that** the first observation region (30) is arranged in a first observation plane (45), and the second observation region (34) is arranged in a second observation plane (46), and the two observation planes (45, 46) are arranged so as to be spaced apart from one another.

8. The production plant (1) according to claim 7, **characterized in that** the first observation plane (45) and the second observation plane (46) of the two observation regions (30, 34) are arranged so as to run in parallel to one another.

9. The production plant (1) according to one of claims 5 to 8, **characterized in that** the first transmission device (31) and the second transmission device (35) are arranged on the upper press beam (16) in the first end face region (47) thereof, and the first detection device (32) and the second detection device (36) are arranged on the upper press beam (16) in the second end face region (48) thereof, opposite the first end face region (47).

10. The production plant (1) according to one of claims 5 to 8, **characterized in that** the first transmission device (31) and the second transmission device (35) are arranged on the upper press beam (16) in the region of one of the first longitudinal end faces (18, 49) thereof, and the first detection device (32) and the second detection device (36) are arranged on the upper press beam (16) in the region of the longitudinal end face (49, 18) opposite thereto.

11. The production plant (1) according to one of claims 5 to 8, **characterized in that** the first transmission device (31) and the first detection device (32) are each arranged on one of the end face regions (47, 48) of the upper press beam (16), so as to be spaced apart from one another in the direction of the longitudinal extension of the upper press beam (16), and **in that** at least the second transmission device (35) is arranged on the upper press beam (16) in the region of one of the longitudinal end faces (18, 49).

12. The production plant (1) according to claim 11, **characterized in that** the second detection device (36) is arranged in the region of the same longitudinal end face (18, 49) on the upper press beam (16) as the second transmission device (35), or **in that** the second detection device (36) is arranged on the upper press beam (16) in the region of the longitudinal end face (49, 18) opposite the second transmission device (35).

13. The production plant (1) according to one of claims 5 to 12, **characterized in that** a third safety device (37) with at least a third transmission device (39) and at least a third detection device (40) is provided, and a third observation region (38) defined by the third safety device (37) is configured for observing the immediate bending region between the bending punch (5) and the bending die (6) of the bending tool (4).

14. The production plant (1) according to claim 13, **characterized in that** the third safety device (37) is arranged on the upper press beam (16), in particular in the region of its opposite end face regions (47, 48).

## Revendications

1. Procédé de surveillance de la zone à risque d'une installation de fabrication (1) pour le pliage en l'air ou le pliage par estampage d'une pièce (2) à fabriquer à partir d'une tôle au moyen d'une presse plieuse (3) devant sa barre de pression supérieure (16), comprenant les étapes suivantes :
- mise à disposition de la presse plieuse (3), plus particulièrement d'une presse à cintrer, avec un châssis de machine (7), une barre de pression inférieure (13), une barre de pression supérieure (16) ainsi que des logements d'outils (19, 20) disposés ou réalisés sur les barres de pression (13, 16), dans lequel la barre de pression supérieure (16) comprend une face frontale (43), une face arrière (44), une première partie d'extrémité frontale (47), une deuxième partie d'extrémité frontale (48) ainsi qu'une face frontale longitudinale supérieure (49) et une face frontale longitudinale inférieure (18),
- mise à disposition d'au moins un outil de pliage (4) avec au moins un poinçon de pliage (5) et au moins une matrice de pliage (6),
- mise à disposition d'un système de sécurité (28) avec au moins un dispositif de sécurité (29, 33, 37) comprenant au moins un dispositif d'émission (31, 35, 39) et au moins un dispositif de détection (32, 36, 40), dans lequel le dispositif de sécurité (29, 33, 37) définit une zone de surveillance (30, 34, 38) et
- un premier dispositif de sécurité (29) du système de sécurité (28) définit, avec son premier dispositif d'émission (31) et son premier dispositif de détection (32), une première zone de surveillance (30), dans lequel le premier dispositif d'émission (31) et le premier dispositif de détection (32) sont disposés sur la barre de pression supérieure (16) et la première zone de surveillance (30) est disposée devant la face frontale (43) de la barre de pression supérieure (16) de façon à ce que, lors de l'entrée d'un objet dans la première zone de surveillance (30), un premier signal soit généré par le premier dispositif de sécurité (29) et transmis à un dispositif de commande (24),
- mise à disposition du dispositif de commande (24) et d'un terminal d'entrée (25), dans lequel le système de sécurité (28) et le terminal d'entrée (25) sont reliés en communication avec le dispositif de commande (24),
**caractérisé en ce que**
- un deuxième dispositif de sécurité (33) avec un deuxième dispositif d'émission (35) et un deuxième dispositif de détection (36) est mis à disposition, dans lequel le deuxième dispositif de sécurité (33) définit une deuxième zone de surveillance (34) et le deuxième dispositif d'émission (35) et le deuxième dispositif de détection (36) sont également disposés sur la barre de pression supérieure (16),
- la deuxième zone de surveillance (34) est également disposée devant la face frontale (43) de la barre de pression supérieure (16) et de manière directement adjacente au premier dispositif de sécurité (29) ainsi qu'entre le premier dispositif de sécurité (29) et la barre de pression supérieure (16) et
- lors de l'entrée d'un objet dans la deuxième zone de surveillance (34), un deuxième signal est généré par le deuxième dispositif de sécurité (33) et transmis au dispositif de commande (24).

2. Procédé selon la revendication 1, **caractérisé en ce que** le dispositif de commande (24), lors de la réception du premier signal, réduit la vitesse de déplacement de la barre de pression supérieure (16) en direction de la barre de pression inférieure (13) par rapport à une vitesse de déplacement pré-réglée ou prédéterminée par le dispositif de commande (24).

3. Procédé selon la revendication 1, **caractérisé en ce que** le dispositif de commande (24), lors de la réception du deuxième signal, génère un ordre d'arrêt d'urgence et le mouvement de déplacement de la barre de pression supérieure (16) en direction de la barre de pression inférieure (13) est arrêté.

4. Procédé selon l'une des revendications 1 à 3, **caractérisé en ce que** l'au moins un premier dispositif de sécurité (29) n'est activé par le dispositif de commande (24) que lors d'une entrée d'un ordre de démarrage pour le début du processus de pliage et/ou **en ce que** l'au moins un dispositif de sécurité (33) n'est activé par le dispositif de commande (24) que lors d'une entrée d'un ordre de démarrage pour le début du processus de pliage.

5. Installation de fabrication (1) pour le pliage en l'air ou le pliage par estampage d'une pièce (2) à fabriquer à partir d'une tôle au moyen d'une presse plieuse (3), plus particulièrement pour l'exécution du procédé selon l'une des revendications précédentes, comprenant
- la presse plieuse (3), plus particulièrement une presse à cintrer, avec un châssis de machine (7), une barre de pression inférieure (13), une barre de pression supérieure (16) ainsi que des logements d'outils (19, 20) disposés ou réalisés sur les barres de pression (13, 16), dans lequel la barre de pression supérieure (16) comprend une face frontale (43), une face arrière (44), une première partie d'extrémité frontale (47), une deuxième partie d'extrémité frontale (48) ainsi qu'une face frontale longitudinale supérieure (49) et une face frontale longitudinale inférieure (18),
- au moins un outil de pliage (4) avec au moins un poinçon de pliage (5) et au moins une matrice de pliage (6),
- un système de sécurité (28) avec au moins un dispositif de sécurité (29, 33, 37) comprenant au moins un dispositif d'émission (31, 35, 39) et au moins un dispositif de détection (32, 36, 40), dans lequel le dispositif de sécurité (29, 33, 37) définit une zone de surveillance (30, 34, 38) et
- le premier dispositif de sécurité (29) définit, avec son premier dispositif d'émission (31) et son premier dispositif de détection (32) du système de sécurité (28), une première zone de surveillance (30), dans lequel le premier dispositif d'émission (31) et le premier dispositif de détection (32) sont disposés sur la barre de pression supérieure (16) et la première zone de surveillance (30) est disposée devant la face frontale (43) de la barre de pression supérieure (16),
- un dispositif de commande (24) et un terminal d'entrée (25), dans lequel le système de sécurité (28) et le terminal d'entrée (25) sont reliés en communication avec le dispositif de commande (24),
**caractérisée en ce que**
- un deuxième dispositif de sécurité (33) avec un deuxième dispositif d'émission (35) et un deuxième dispositif de détection (36) est prévu, dans lequel le deuxième dispositif de sécurité (33) définit une deuxième zone de surveillance (34) et le deuxième dispositif d'émission (35) et le deuxième dispositif de détection (36) sont également disposés sur la barre de pression supérieure (16),
- la deuxième zone de surveillance (34) est également disposée devant la face frontale (43) de la barre de pression supérieure (16) et de manière directement adjacente au premier dispositif de sécurité (29) ainsi qu'entre le premier dispositif de sécurité (29) et la barre de pression supérieure (16).

6. Installation de fabrication (1) selon la revendication 5, **caractérisée en ce que** la première zone de surveillance (30) est disposée à une distance plus grande devant la face frontale (43) de la barre de pression supérieure (16) que la deuxième zone de surveillance (34).

7. Installation de fabrication (1) selon la revendication 5 ou 6, **caractérisée en ce que** la première zone de surveillance (30) est disposée dans un premier plan de surveillance (45) et la deuxième zone de surveillance (34) est disposée dans un deuxième plan de surveillance (46) et les deux plans de surveillance (45, 46) sont distants entre eux.

8. Installation de fabrication (1) selon la revendication 7, **caractérisée en ce que** le premier plan de surveillance (45) et le deuxième plan de surveillance (46) des deux zones de surveillance (30, 34) sont parallèles entre eux.

9. Installation de fabrication (1) selon l'une des revendications 5 à 8, **caractérisée en ce que** le premier dispositif d'émission (31) et le deuxième dispositif d'émission (35) sont disposés sur la barre de pression supérieure (16) dans sa première partie d'extrémité frontale (47) et le premier dispositif de détection (32) et le deuxième dispositif de détection (36) sont disposés sur la barre de pression supérieure (16) dans la deuxième partie d'extrémité frontale (48) disposée en face de la première partie d'extrémité frontale (47).

10. Installation de fabrication (1) selon l'une des revendications 5 à 8, **caractérisée en ce que** le premier dispositif d'émission (31) et le deuxième dispositif d'émission (35) sont disposés sur la barre de pression supérieure (16) au niveau d'une de ses face frontales longitudinales (18, 49) et le premier dispositif de détection (32) et le deuxième dispositif de détection (36) sont disposés sur la barre de pression supérieure (16) au niveau de la face frontale longitudinale (49, 18) disposée en face de celle-ci.

11. Installation de fabrication (1) selon l'une des revendications 5 à 8, **caractérisée en ce que** le premier dispositif d'émission (31) et le premier dispositif de détection (32) sont disposés de manière distante entre eux dans la direction de l'extension longitudinale de la barre de pression supérieure (16) chacun sur une des parties d'extrémité frontale (47, 48) de la barre de pression supérieure (16) sur celle-ci et **en ce qu'**au moins le deuxième dispositif d'émission (35) est disposé sur la barre de pression supérieure (16) est disposé au niveau d'une des faces frontales longitudinales (18, 49).

12. Installation de fabrication (1) selon la revendication 11, **caractérisée en ce que** le deuxième dispositif de détection (36) est disposé au niveau de la même face frontale longitudinale (18, 49) sur la barre de pression supérieure (16) que le deuxième dispositif d'émission (35) ou **en ce que** le deuxième dispositif de détection (36) est disposé sur la barre de pression supérieure (16) au niveau de la face frontale longitudinale (49, 18) disposée en face du deuxième dispositif d'émission (35).

13. Installation de fabrication (1) selon l'une des revendications 5 à 12, **caractérisée en ce que** le troisième dispositif de sécurité (37) est prévu avec au moins un troisième dispositif d'émission (39) et au moins un troisième dispositif de détection (40) et une troisième zone de surveillance (38) définie par le troisième dispositif de sécurité (37) est conçue pour la surveillance d'une zone de pliage immédiate entre le poinçon de pliage (5) et la matrice de pliage (6) de l'outil de pliage (4).

14. Installation de fabrication (1) selon la revendication 13, **caractérisée en ce que** le troisième dispositif de sécurité (37) est disposé sur la barre de pression supérieure (16), plus particulièrement au niveau de ses parties d'extrémité frontales (47, 48) disposées en face l'une de l'autre.
